# EUROPEAN PATENT SPECIFICATION

(11) **EP 3 675 990 B1**
(45) Date of publication and mention of the grant of the patent: **16.03.2022**
(21) Application number: 18749829.0
(22) Date of filing: 10.08.2018
(51) Int. Cl.: B01D 67/00, B01D 71/68, B01D 71/80, B01D 71/52

(54) **MEMBRANE MANUFACTURING WITH A COSOLVENT IN THE POLYMER DOPE SOLUTION**
MEMBRANHERSTELLUNG MIT EINEM CO-LÖSUNGSMITTEL IN DER POLYMERSPINNLÖSUNG
FABRICATION DE MEMBRANE COMPORTANT UN COSOLVANT DANS UNE SOLUTION À FILER POLYMÈRE

(30) Priority: 28.08.2017 EP 17188167; 28.02.2018 EP 18159165
(43) Date of publication of application: 08.07.2020
(73) Proprietor: DuPont Safety & Construction, Inc., Wilmington, Delaware 19805 (US)
(72) Inventor: GRONWALD, Oliver, 67056 Ludwigshafen (DE); WEBER, Martin, 67056 Ludwigshafen (DE); HEIJNEN, Martin, 86926 Greifenberg (DE)
(74) Representative: Heinemann, Monica
(86) International application number: PCT/EP2018/071801
(87) International publication number: WO 2019/042749

(56) References cited:
- EP-A1- 2 963 076
- WO-A1-00/11058
- WO-A1-01/02085
- WO-A1-98/29478
- WO-A1-2015/147632
- WO-A1-2015/168392
- WO-A1-2017/045985
- DATABASE WPI Thomson Scientific, London, GB; AN 2016-483168 XP002777736, "Preparing polyether sulfone hollow fiber microfiltration membrane involves selecting film liquid spray formulations and dry-wet spinning spinning membrane technology", -& CN 105 771 702 A ((SHAN-N) SHANDONG ZHAOJIN MOTIAN CO LTD) 20 July 2016 (2016-07-20)

## Description

The invention relates to a process for making a nonionic membrane M comprising the following steps: providing a dope solution D comprising a polymer P selected from polyphenylenesulfone or mixtures of polyphenylenesulfone with nonionic polyarylene ethers, a first solvent selected from aprotic polar solvents, and a cosolvent selected from C₂-C₈ alkanediol, C₃-C₈ alkanetriol, polyethylene glycol, or mixtures thereof; and preparing the membrane by bringing the dope solution D into contact with a coagulating agent. The invention further relates to a nonionic membrane M obtainable in said process.

The manufacturing of membranes with a polymer dope solution is known from WO98/29478, WO2015/168392, CN105771702 and

WO2015/056145.

However, the known processes tend to give membranes with low cut-off, and low water permeabilities. Further, mechanical stability and flexibility (elongation at break) should be improved.

Object was to overcome these disadvantages, especially for polyphenylenesulfone membranes.

The object was solved by a process for making a nonionic membrane M comprising the following steps:
providing a dope solution D (also referred to as step a))comprising
- a polymer P selected from polyphenylenesulfone or mixtures of polyphenylenesulfone with nonionic polyarylene ethers,
- a first solvent selected from aprotic polar solvents, and
- a cosolvent selected from 1,2-propanediol, 1,3-propanediol or mixtures thereof; and preparing the membrane (also referred to as step c)) by bringing the dope solution D into contact with a coagulating agent, wherein the weight ratio of the first solvent to the cosolvent is in the range from 8:1 to 5:1.

The object was also solved by a nonionic membrane M obtainable in the process.

In the context of this application a **membrane** can be understood to be a thin, semipermeable structure capable of separating two fluids or separating molecular and/or ionic components or particles from a liquid. A membrane may act as a selective barrier, allowing some particles, substances or chemicals to pass through, while retaining others. For example, membranes M can be reverse osmosis (RO) membranes, forward osmosis (FO) membranes, nanofiltration (NF) membranes, ultrafiltration (UF) membranes or microfiltration (MF) membranes.

The **first solvent** is usually selected from high-boiling ethers, esters, ketones, asymmetrically halogenated hydrocarbons, anisole, dimethylformamide, dimethyl sulfoxide, sulfolane, N-methyl-2-pyrrolidone, N-ethyl-2-pyrrolidone, or mixtures thereof.

Preferably, the first solvent is selected from N-methyl-2-pyrrolidone, N-ethyl-2-pyrrolidone, or mixtures thereof. In particular, the first solvent is selected from N-methyl-2-pyrrolidone.

The dope solution D often comprises at least 35 wt%, preferably at least 45 wt%, and in particular at least 55 wt% of the first solvent.

In another form the dope solution D often comprises at least 35 wt%, preferably at least 45 wt%, and in particular at least 55 wt% of the first solvent, which may be selected from N-methyl-2-pyrrolidone, N-ethyl-2-pyrrolidone, or mixtures thereof.

The cosolvent is selected from 1,2-propandiol, 1,3-propandiol or mixtures thereof.

In particular, the cosolvent is selected from 1,2-propandiol.

The dope solution D often comprises 1 to 30 wt%, preferably 2 to 20 wt%, and in particular 5 to 15 wt% of the cosolvent.

The weight **ratio** of the first solvent to the cosolvent is in the range from 8:1 to 5:1.

The polymer P is selected from polyphenylenesulfone or mixtures of polyphenylenesulfone with nonionic **polyarylene ethers.** Preferably, the polymer P is selected from polyphenylenesulfone.

Polyphenylenesulfone is commerically available.

Typically, the polymer P comprises at least 60 wt%, preferably at least 80 wt%, and in particular at least 95 wt% of the polyphenylenesulfone. In another form the polymer P consists of the polyphenylenesulfone.

Typically, the polymer P comprises up to 40 wt%, preferably up to 20 wt%, and in particular up to 5 wt% of the polyarylene ether A.

The polyarylene ether A is **nonionic.** Normally, the polyarylene ethers A is free of ionic or charged groups, such as in sulfonated polyarylene ethers.

Suitable nonionic polyarylene ethers A are known as such to those skilled in the art and can be formed from polyarylene ether units of the general formula IV 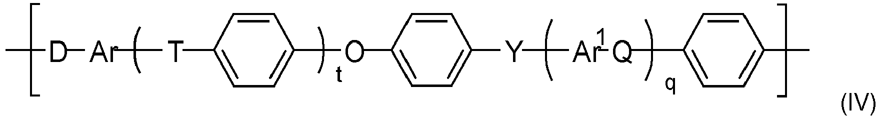 with the following definitions:
- t, q:: each independently 0, 1, 2 or 3,
- Q, T, Y:: each independently a chemical bond or group selected from -O-, -S-, -SO₂-, S=O, C=O, -N=N-, -CR^{a}R^{b}- where R^{a} and R^{b} are each independently a hydrogen atom or a C₁-C₁₂-alkyl, C₁-C₁₂-alkoxy or C₆-C₁₈-aryl group, where at least one of Q, T and Y is not -O-, and at least one of Q, T and Y is -SO₂-, and
- Ar, Ar¹:: each independently an arylene group having from 6 to 18 carbon atoms,
- D:: a chemical bond or -O-

In particular, D is an oxygen atom -O- when bound to another arylene ether unit. D is a chemical bond when bound to a polyalkyleneoxide block.

The polyarylene ethers are typically prepared by polycondensation of suitable starting compounds in dipolar aprotic solvents at elevated temperature (see, for example, R.N. Johnson et al., J. Polym. Sci. A-1 5 (1967) 2375, J.E. McGrath et al., Polymer 25 (1984) 1827). The polyarylene ethers are usually different from the polyphenylenesulfone.

Suitable polyarylene ether can be provided by reacting at least one starting compound of the structure X-Ar-Y (M1) with at least one starting compound of the structure HO-Ar¹-OH (M2) in the presence of a solvent (L) and of a base (B), where
- Y is a halogen atom,
- X is selected from halogen atoms and OH, preferably from halogen atoms, especially F, Cl or Br, and
- Ar and Ar¹ are each independently an arylene group having 6 to 18 carbon atoms.

In one embodiment, a polyarylene ether which is formed from units of the general formula IV with the definitions as above is provided in the presence of a solvent (L):

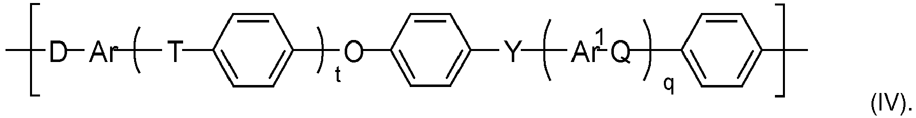

If Q, T or Y, with the abovementioned prerequisites, is a chemical bond, this is understood to mean that the group adjacent to the left and the group adjacent to the right are bonded directly to one another via a chemical bond.

Preferably, Q, T and Y in formula (IV), however, are independently selected from -O- and -SO₂, with the proviso that at least one of the group consisting of Q, T and Y is -SO₂-.

When Q, T or Y are -CR^{a}R^{b}-, R^{a} and R^{b} are each independently a hydrogen atom or a C₁-C₁₂-alkyl, C₁-C₁₂-alkoxy or C₆-C₁₈-aryl group.

Preferred C₁-C₁₂-alkyl groups comprise linear and branched, saturated alkyl groups having from 1 to 12 carbon atoms. Particularly preferred C₁-C₁₂-alkyl groups are: C₁-C₆-alkyl radicals such as methyl, ethyl, n-propyl, isopropyl, n-butyl, sec-butyl, 2- or 3-methylpentyl and longer-chain radicals such as unbranched heptyl, octyl, nonyl, decyl, undecyl, lauryl, and the singularly or multiply branched analogs thereof.

Useful alkyl radicals in the aforementioned usable C₁-C₁₂-alkoxy groups include the alkyl groups having from 1 to 12 carbon atoms defined above. Cycloalkyl radicals usable with preference comprise especially C₃-C₁₂-cycloalkyl radicals, for example cyclopropyl, cyclobutyl, cyclopentyl, cyclohexyl, cycloheptyl, cyclooctyl, cyclopropylmethyl, cyclopropylethyl, cyclopropylpropyl, cyclobutylmethyl, cyclobutylethyl, cyclpentylethyl, -propyl, -butyl, -pentyl, -hexyl, cyclohexylmethyl, -dimethyl, -trimethyl.

Ar and Ar¹ are each independently a C₆-C₁₈-arylene group. Proceeding from the starting materials described below, Ar is preferably derived from an electron-rich aromatic substance which is preferably selected from the group consisting of hydroquinone, resorcinol, dihydroxynaphthalene, especially 2,7-dihydroxynaphthalene, and 4,4'-bisphenol. Ar¹ is preferably an unsubstituted C₆- or C₁₂-arylene group.

Useful C₆-C₁₈-arylene groups Ar and Ar¹ are especially phenylene groups, such as 1,2-, 1,3- and 1,4-phenylene, naphthylene groups, for example 1,6-, 1,7-, 2,6- and 2,7-naphthylene, and the arylene groups derived from anthracene, phenanthrene and naphthacene.

Preferably, Ar and Ar¹ in the preferred embodiments of the formula (IV) are each independently selected from the group consisting of 1,4-phenylene, 1,3-phenylene, naphthylene, especially 2,7-dihydroxynaphthalene, and 4,4'-bisphenylene.

Units present with preference within the polyarylene ether are those which comprise at least one of the following repeat structural units IVa to IVo except IVg (which shows the structure of the polyphenylenesulfone), wherein D has the same meaning as defined above:

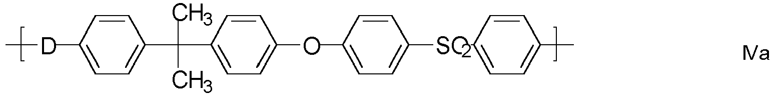

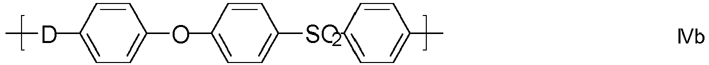

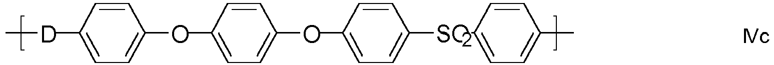

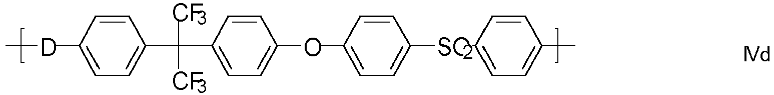

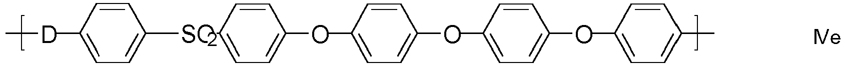

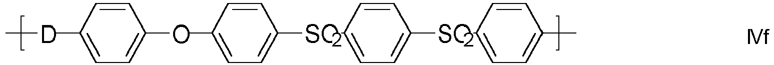

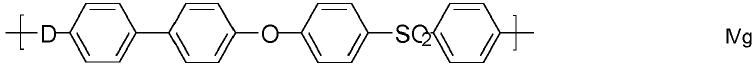

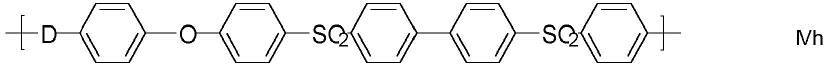

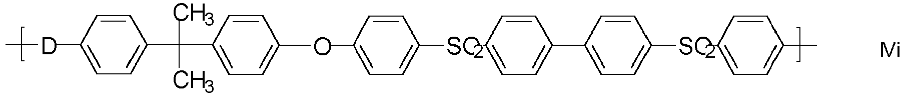

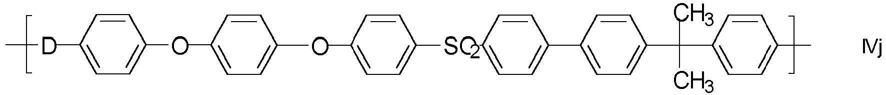

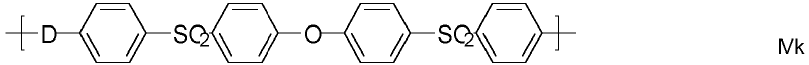

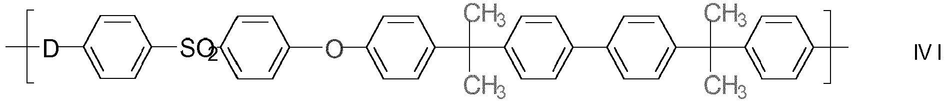

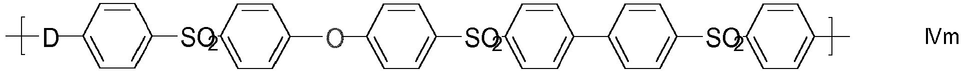

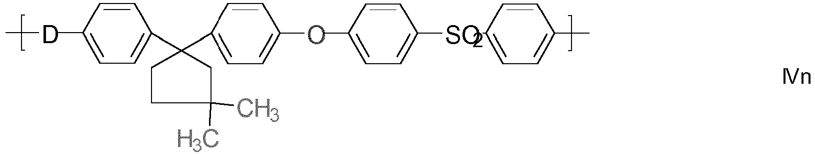

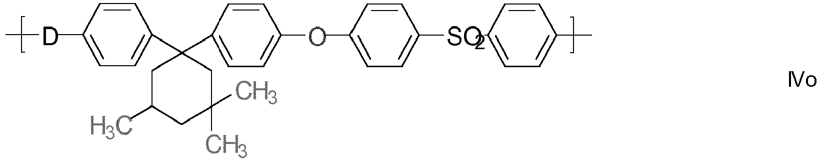

Preference is also given to those units in which one or more 1,4-dihydroxyphenyl units are replaced by resorcinol or dihydroxynaphthalene units.

In a preferred form of the polyarylene ether the units of the general formula IV are units IVa and IVk.

In a more preferred form the polyarylene ether is formed essentially from one kind of units of the general formula IV, especially from one unit selected from
IVa (also known as polysulfone), and
IVk (also known als polyethersulfone PESU).

In another preferred form the polymer P is selected from polyphenylenesulfone and mixtures of polyphenylenesulfone with polyethersulfone.

In particular, the polymer P is selected from polyphenylenesulfone (PPSU).

Suitable polyarylene ether A or suitable polyphenylenesulfone preferably have a mean molecular weight Mn (number average) in the range from 1000 to 70000 g/mol, especially preferably 2000 to 40000 g/mol and particularly preferably 2500 to 30000 g/mol. The average molecular weight of the polyarylene ether blocks can be controlled and calculated by the ratio of the monomers forming the polyarylene ether blocks, as described by H.G. Elias in "An Introduction to Polymer Science" VCH Weinheim, 1997, p. 125.

Suitable starting compounds for the preparation of polyphenylenesulfone or of polyarylene ehters are known to those skilled in the art and are not subject to any fundamental restriction, provided that the substituents mentioned are sufficiently reactive within a nucleophilic aromatic substitution.

Preferred starting compounds are difunctional. "Difunctional" means that the number of groups reactive in the nucleophilic aromatic substitution is two per starting compound. A further criterion for a suitable difunctional starting compound is a sufficient solubility in the solvent, as explained in detail below.

Preference is given to monomeric starting compounds, which means that the reaction is preferably performed proceeding from monomers and not proceeding from prepolymers.

The starting compound (M1) used is preferably a dihalodiphenyl sulfone. The starting compound (M2) used is preferably dihydroxydiphenyl sulfone.

Suitable starting compounds (M1) are especially dihalodiphenyl sulfones such as 4,4'-dichlorodiphenyl sulfone, 4,4'-difluorodiphenyl sulfone, 4,4'-dibromodiphenyl sulfone, bis(2-chlorophenyl) sulfones, 2,2'-dichlorodiphenyl sulfone and 2,2'-difluorodiphenyl sulfone, particular preference being given to 4,4'-dichlorodiphenyl sulfone and 4,4'-difluorodiphenyl sulfone.

Preferred compounds (M2) are accordingly those having two phenolic hydroxyl groups.

Phenolic OH groups are preferably reacted in the presence of a base in order to increase the reactivity toward the halogen substituents of the starting compound (M1).

Preferred starting compounds (M2) having two phenolic hydroxyl groups are selected from the following compounds:
- dihydroxybenzenes, especially hydroquinone and resorcinol;
- dihydroxynaphthalenes, especially 1,5-dihydroxynaphthalene, 1,6-dihydroxynaphthalene, 1,7-dihydroxynaphthalene, and 2,7-dihydroxynaphthalene;
- dihydroxybiphenyls, especially 4,4'-biphenol and 2,2'-biphenol;
- bisphenyl ethers, especially bis(4-hydroxyphenyl) ether and bis(2-hydroxyphenyl) ether;
- bisphenylpropanes, especially 2,2-bis(4-hydroxyphenyl)propane, 2,2-bis(3-methyl-4-hydroxyphenyl)propane and 2,2-bis(3,5-dimethyl-4-hydroxyphenyl)propane;
- bisphenylmethanes, especially bis(4-hydroxyphenyl)methane;
- bisphenyl sulfones, especially bis(4-hydroxyphenyl) sulfone;
- bisphenyl sulfides, especially bis(4-hydroxyphenyl) sulfide;
- bisphenyl ketones, especially bis(4-hydroxyphenyl) ketone;
- bisphenylhexafluoropropanes, especially 2,2-bis(3,5-dimethyl-4-hydroxyphenyl)hexafluoropropane; and
- bisphenylfluorenes, especially 9,9-bis(4-hydroxyphenyl)fluorene;
- 1,1-Bis(4-hydroxyphenyl)-3,3,5-trimethyl-cyclohexane (bisphenol TMC).

It is preferable, proceeding from the aforementioned aromatic dihydroxyl compounds (M2), by addition of a base (B), to prepare the dipotassium or disodium salts thereof and to react them with the starting compound (M1). The aforementioned compounds can additionally be used individually or as a combination of two or more of the aforementioned compounds.

Hydroquinone, resorcinol, dihydroxynaphthalene, especially 2,7-dihydroxynaphthalene, bisphenol A, dihydroxydiphenyl sulfone and 4,4'-bisphenol are particularly preferred as starting compound (M2).

However, it is also possible to use trifunctional compounds. In this case, branched structures are the result. If a trifunctional starting compound (M2) is used, preference is given to 1,1,1-tris(4-hydroxyphenyl)ethane.

The ratios to be used derive in principle from the stoichiometry of the polycondensation reaction which proceeds with theoretical elimination of hydrogen chloride, and are established by the person skilled in the art in a known manner.

In a preferred embodiment, the ratio of halogen end groups to phenolic end groups is adjusted by controlled establishment of an excess of the dihalogen starting compound (M1) in relation to a difunctional compound (M2) as starting compound and polyalkyleneoxide PAO.

More preferably, the molar (M1)/(M2) ratio in this embodiment is from 1.001 to1.7, even more preferably from 1.003 to 1.5, especially preferably from 1.005 to 1.3, most preferably from 1.01 to 1.1. Preferably, the molar ratio (M1) / (M2 + polyalkyleneoxide PAO) is1.000 to 1.25, more preferably 1.005 to 1.2.

Alternatively, it is also possible to use a starting compound (M1) where X = halogen and Y = OH. In this case, the ratio of halogen to OH end groups used is preferably from 1.001 to 1.7, more preferably from 1.003 to 1.5, especially from 1.005 to 1.3, most preferably 1.01 to 1.251.

Preferably, the conversion in the polycondensation is at least 0.9, which ensures a sufficiently high molecular weight.

In **step a)** the dope solution D is provided comprising
- the polymer P,
- the first solvent, and
- the cosolvent.

The dope solution is usually a solution of the polymer P in the first solvent and the cosolvent. The polymer P is usually present in dissolved form.

The dope solution D often comprises 3 to 40 wt%, preferably 10 to 30 wt%, and in particular 15 to 25 wt% of the polymer P.

The process may optionally further comprise of adding to the dope solution D a solution S (also referred to as **step b)** ) which comprises a copolymer C, wherein said copolymer C comprises blocks of at least one polyarylene ether A and blocks of polyalkylene oxide PAO, wherein the content of polyalkylene oxide PAO in copolymer C is 30 to 90 % by weight.

The steps a) and b) can be made in order. The order of addition of the compounds to the dope solution D can be be in any order. Preferably, The steps a) and b) are made in the alphabetic order. The steps a) and c) are usually made in the alphabetic order.

Normally solution S is mixed with dope solution D so that the mixture obtained comprises copolymer C and polymer P in a mass ratio of 1:99 to 1:3, preferably 1: 50 to1:4, more preferably 1:30 to 1:5.

Typically, the membrane M contains copolymer C and polymer P in a mass ratio of 1:99 to 1:3.

Suitable **copolymers C** comprise blocks of at least one polyarylene ether A and blocks of at least one polyalkylene oxide PAO. Such copolymers C are known from WO 2016/023765, page 2, line 38 to page 12, line 42.

The blocks of polyarylene ether A may be selected from the polyarylene ethers of which the polymer P is made and described above.

Suitable blocks of polyalkylene oxide PAO comprise at least one alkylene oxide in polymerized form. Examples of alkylene oxides include ethylene oxide (EO), propylene oxide (PO), butylene oxide (BO), styrene oxide (SO) and tetrahydrofurane (THF). Preferably, said at least one alkylene oxide is selected from ethylene oxide, propylene oxide, butylene oxide and tetrahydrofurane, especially preferably EO and PO. The blocks of polyalkylene oxide PAO have often an average molecular mass Mn of 150 g/mol to 20000 g/mol.

Preferably at least 80 mol% and more preferably at least 90 mol% and even more preferably at least 95 mol% of said polyalkylene oxide blocks PAO are covalently bound to a polyarylene ether block A. In one preferred embodiment essentially all polyalkylene oxide blocks AO are covalently bound to a polyarylene ether block A. Normally, said polyalkylene oxide blocks PAO are covalently bound to a polyarylene ether block A via an -O- group (an ether group).

Copolymers C have a content of polyalkyleneoxide PAO of 30 to 90% by weight, preferably 35 to 70 % by weight, even more preferably 35 to 55 % by weight. Preferably, copolymers C comprise 30 to 90% by weight, preferably 35 to 70% by weight, even more preferably 35 to 55 % by weight of polyalkyleneoxide like polyethyleneoxide and 70 to 10 %, preferably 65 to 30 % and even more preferably 65 to 45 % by weight of at least one polyarylene ether A.

In one embodiment, suitable block copolymers comprise individual polymer molecules of the general structure PAO-A or PAO-A-PAO. Normally, at least 50 mol%, preferably at least 70 mol%, more preferably at least 90 and even more preferably at least 95 mol% of all individual polymer molecules comprising a polyalkylene oxide block that are comprised in suitable block copolymers have the general structure PAO-A or PAO-A-PAO.

In one embodiment, at least 50 mol %, more preferably at least 70 mol%, even more preferably at least 80 mol %, especially preferably at least 90 mol% and particularly preferably at least 95 mol% or at least 99 mol% of the individual polymer molecules comprised in block copolymers C comprise at least one polyalkylene oxide block PAO and at least one polyarylene ether block A.

In preferred embodiments, polyarylene oxide blocks A in block copolymers C are polysulfones, polyethersulfones or polyphenylenesulfones.

In **step c)** the membrane is prepared by bringing the dope solution D into contact with a coagulating agent.

Usually, the membrane M is formed by precipitation of polymer P and optionally copolymer C.

Coagulation agents are known to the person skilled in the art and can be adjusted by routine experiments. In many cases the coagulation agent will be a mixture of different solvent based and/or non-solvent based coagulation agents. An example for a solvent based coagulation agent is N-methylpyrrolidone. Non-solvent based coagulation agents are for instance water, n-butanol, i-butanol, tert-butanol, n-propanol, iso-propanol, 1,2-ethandiol, neopentylglycol, 1,2-propandiol, 1,3-propandiol, trimethylolpropane. A preferred coagulation agent is water in its liquid form or as water vapor.

Preferably, the coagulation agent comprises water, e.g. at least 50 wt%, preferably at least 80 wt%, and in particular at least 95 wt% of the amount of coagulation agent.

Preferably, the precipitation is carried out so that at least 90 mol% of polymer P and optionally copolymer C are precipitated.

The membrane M may comprise additives like polyvinyl pyrrolidones or polyalkylene oxides like polyethylene oxides.

In one preferred embodiment, membranes M comprise 0.1 to 50 % by weight of polyvinylpyrrolidone and 99.9 to 50% by weight of polymer P and optionally copolymer C. In one preferred embodiment, membranes M comprise to 15 % by weight of polyvinylpyrrolidone and 99.9 to 50% by weight of polymer P and optionally copolymer C.

The membrane M may comprise at least 50 wt%, preferably at least 60 wt%, and in particular at least 70 wt% of the polyphenylenesulfone, based on the total weight of the membrane.

The membrane M is a **nonionic** membrane. Normally, the membrane M is free of ionic or charged polymers, such as sulfonated polyarylen ethers.

Membranes M can for example be reverse osmosis (RO) membranes, forward osmosis (FO) membranes, nanofiltration (NF) membranes, ultrafiltration (UF) membranes or microfiltration (MF) membranes. Such membrane types, their preparation and use are known, e.g. from WO 2016/023765, page 15 line 20 to page 21, line 10.

The invention further relates to a use of the membrane M for **filtering** an aqueous liquid through the membrane. The filtration may be made by conventional filtration processes and parameters, which are known to experts.

The **liquid** may contain at least 80 wt%, preferably at least 90 wt%, and in particular at least 95 wt% water. Usually, the liquid is industrial waste water, sea water, surface water, ground water, process water, drinking water, liquid food (e.g. a beverage, such as beer, wine, juices, dairy products, or soft drinks).

### Examples

- Ultrason^{®} P 3010:: polyphenylenesulfone (PPSU) with a viscosity number (ISO 307, 1157, 1628; in 0.01 g/mol phenol/1,2 orthodichlorobenzene 1:1 solution) of 71; a glass transition temperature (DSC, 10°C/min; according to ISO 11357-1/-2) of 220 °C.
- Luvitec^{®} K90:: polyvinylpyrrolidone with a polyvinylpyrrolidone with a solution viscosity characterised by the K-value of 90, determined according to the method of Fikentscher (Fikentscher, Cellulosechemie 13, 1932 (58)).
- PAO-1:: C16/C18-alkylpolyethyleneglycol with hydroxyl number (DIN 53240) of 14 mg/g KOH and a molecular mass (calculated on the basis of hydroxyl number) of 3780 g/mol.

### Synthesis of Copolymers C

The following copolymers were prepared and analyzed according to the copolymers of Examples 1 to 5 in WO 2016/023765. The data are summarized in Table 1.

Copolymer 1: 287 g of 4,4'-Dichlorodiphenylsulfone (DCDPS), 148.5 g of 4,4'-Dihydroxydiphenylsulfone (DHDP), 331 g of PAO-1 and 145 g potassium carbonate were suspended in 525 ml NMP in a nitrogen atmosphere. The mixture was heated to 190 °C within one hour. The water that was formed in the reaction was continuously removed by distillation. The solvent level inside the reactor was maintained at a constant level by addition of further NMP. After a reaction time of six hours, the reaction was stopped by addition of 933 ml of NMP with a temperature of 23 °C. The potassium chloride formed in the reaction was removed by filtration. The solid content of the so obtained solution was 34 % by weight.

Copolymer 2: 172.3 g of DCDPS, 105.7 g of DHDP, 206.6 g of PAO-1 and 89.1 g potassium carbonate were suspended in 315 ml NMP in a nitrogen atmosphere and further reacted as for Copolymer 1. The solid content of the so obtained solution was 29 % by weight.

**Table 1**

| Copolymer | 1 | 2 |
|---|---|---|
| Viscosity number [ml/g] | 12.9 | 35.5 |
| Polyalkyleneoxide content [% by weight] | 39.9 | 35.5 |
| Tg [°C] | -48 | -55 |

### Example 1

### i) Providing the dope solution

Into a three neck flask equipped with a magnetic stirrer there were added 65 ml of N-methylpyrrolidone NMP (the first solvent), 6 g Luvitec^{®} K90, 10 g 1,2-propandiol (the cosolvent) and 19 g of Ultrason^{®} P 3010. The mixture was heated under gentle stirring at 60°C until a homogeneous clear viscous solution was obtained. The solution was degassed overnight at room temperature.

### ii) Preparing the membrane

After that the membrane solution was reheated at 60°C for 2 hours and casted onto a glass plate with a casting knife (300 microns) at 60°C using an Erichsen Coating machine operating at a speed of 5 mm/min.

The membrane film was allowed to rest for 30 seconds before immersion in a water bath at 25°C for 10 minutes to coagulate the Ultrason^{®} P 3010.

### iii) Workup of the membrane:

After the membrane had detached from the glass plate, the membrane was carefully transferred into a water bath for 12 h. Afterwards the membrane was transferred into a bath containing 2500 ppm NaOCI at 50°C for 4.5 h to remove PVP. The membrane was then washed with water at 60°C and one time with a 0.5 wt.-% solution of sodium bisulfite to remove active chlorine. After several washing steps with water the membrane was stored wet until characterization.

### Comparative Example C1

The membrane was prepared as in Example 1 but without the cosolvent 1,2-propandiol. Instead the amount of NMP was increased from 65 to 75 ml.

### Example 2

The membrane was prepared as in Example 1. In addition, 1.6 g Copolymer 1 was added in step i) to the dope solution.

### Comparative Example C2

The membrane was prepared as in Example 2 but without the cosolvent. Instead the amount of NMP was increased accordingly.

### Example 3

The membrane was prepared as in Example 2. In addition, 1.6 g Copolymer 2 was added in step i) to the dope solution.

### Comparative Example C3

The membrane was prepared as in Example 3 but without the cosolvent. Instead the amount of NMP was increased accordingly.

### Example 4 - Membrane characterization

The membranes prepared in Examples 1-3 and the corresponding Comparative Examples C1 -C3 were characterized. The results are summarized in Table 2.

The pure water permeation (PWP in kg/h * m² * bar) of the membranes was tested using a pressure cell with a diameter of 60 mm using ultrapure water (salt-free water, filtered by a Millipore UF-system). In a subsequent test, a solution of different PEG-Standards was filtered at a pressure of 0.15 bar. By GPC-measurement of the feed and permeate, the molecular weight cut-off (MWCO in kDa) of the membranes were determined. Tensile testing was carried out according DIN Iso 527-3 and the membranes characterized with Emodulus (Emod in MPa) and elongation at break (Elong_{B} in %).

**Table 2**

| | PWP | MWCO | Emod | Elong_{B} |
|---|---|---|---|---|
| Example 1 | 600 | 35 | 147 | 60 |
| Comparative Example C1 | 500 | 22 | 115 | 32 |
| | | | | |
| Example 2 | 790 | 36 | 119 | 57 |
| Comparative Example C2 | 610 | 28 | 101 | 31 |
| | | | | |
| Example 3 | 760 | 42 | 121 | 57 |
| Comparative Example C3 | 660 | 31 | 107 | 36 |

The data demonstrated that the advantages of the process, namely that the MWCO increased, and that the PWP also increased. Also mechanical stability and flexibility (elongation at break) improved.

## Claims

1. A process for making a nonionic membrane M comprising the following steps:
providing a dope solution D comprising
- a polymer P selected from polyphenylenesulfone or mixtures of polyphenylenesulfone with nonionic polyarylene ethers,
- a first solvent selected from aprotic polar solvents, and
- a cosolvent selected from 1,2-propanediol, 1,3-propanediol or mixtures thereof; and preparing the membrane by bringing the dope solution D into contact with a coagulating agent, wherein the weight ratio of the first solvent to the cosolvent is in the range from 8:1 to 5:1.

2. The process according to claim 1 wherein the dope solution D comprises 1 to 30 wt%, preferably 2 to 20 wt%, and in particular 5 to 15 wt% of the cosolvent.

3. The process according to any of claims 1 to 2 wherein the dope solution D comprises at least 35 wt%, preferably at least 45 wt%, and in particular at least 55 wt% of the first solvent.

4. The process according to any of claims 1 to 3 wherein the first solvent is selected from high-boiling ethers, esters, ketones, asymmetrically halogenated hydrocarbons, anisole, dimethylformamide, dimethyl sulfoxide, sulfolane, N-methyl-2-pyrrolidone, N-ethyl-2-pyrrolidone, or mixtures thereof.

5. The process according to any of claims 1 to 4 wherein the first solvent is selected from N-methyl-2-pyrrolidone, N-ethyl-2-pyrrolidone, or mixtures thereof.

6. The process according to any of claims 1 to 5 wherein said polymer P is selected from polyphenylenesulfone and mixtures of polyphenylenesulfone with polyethersulfone or polysulfone.

7. The process according to any of claims 1 to 6 wherein said polymer P is selected from polyphenylenesulfone.

8. The process according to any of claims 1 to 7 wherein the polymer P comprises at least 60 wt%, preferably at least 80 wt%, and in particular at least 95 wt% of the polyphenylenesulfone.

9. The process according to any of claims 1 to 8 wherein said at least one coagulating agent comprises water.

10. The process according to any of claims 1 to 9 further comprising a step of adding to the dope solution D a solution S which comprises a copolymer C in solvent L, wherein said copolymer C comprises blocks of at least one polyarylene ether A and blocks of polyalkylene oxide PAO, wherein the content of polyalkylene oxide PAO in copolymer C is 30 to 90 % by weight.

11. A nonionic membrane M obtainable in the process according to any of claims 1 to 10.

12. A use of the nonionic membrane M obtainable in the process according to any of claims 1 to 10 for filtering an aqueous liquid through the membrane.

## Patentansprüche

1. Verfahren zum Herstellen einer nichtionischen Membran M, umfassend die folgenden Schritte:
Bereitstellen einer Spinnlösung D umfassend
- ein Polymer P ausgewählt unter Polyphenylensulfon oder Mischungen von Polyphenylensulfon mit nichtionischen Polyarylenethern,
- ein erstes Lösungsmittel ausgewählt unter aprotischen polaren Lösungsmitteln und
- ein Co-Lösungsmittel ausgewählt unter 1,2-Propandiol, 1,3-Propandiol oder Mischungen davon; und
Herstellen der Membran durch Inkontaktbringen der Spinnlösung D mit einem Koagulierungsmittel, wobei das Gewichtsverhältnis des ersten Lösungsmittels zu dem Co-Lösungsmittel im Bereich von 8:1 bis 5 :1 liegt.

2. Verfahren nach Anspruch 1, wobei die Spinnlösung D 1 bis 30 Gew.-*%*, bevorzugt 2 bis 20 Gew.-*%*, und insbesondere 5 bis 15 Gew.-*%* des Co-Lösungsmittels umfasst.

3. Verfahren nach einem der Ansprüche 1 bis 2, wobei die Spinnlösung D mindestens 35 Gew.-*%* , bevorzugt mindestens 45 Gew.-*%* und insbesondere mindestens 55 Gew.-*%* des ersten Lösungsmittels umfasst.

4. Verfahren nach einem der Ansprüche 1 bis 3, wobei das erste Lösungsmittel unter hochsiedenden Ethern, Estern, Ketonen, asymmetrisch halogenierten Kohlenwasserstoffen, Anisol, Dimethylformamid, Dimethylsulfoxid, Sulfolan, N-Methyl-2-pyrrolidon, N-Ethyl-2-pyrrolidon oder Mischungen davon ausgewählt wird.

5. Verfahren nach einem der Ansprüche 1 bis 4, wobei das erste Lösungsmittel unter N-Methyl-2-pyrrolidon, N-Ethyl-2-pyrrolidon oder Mischungen davon ausgewählt wird.

6. Verfahren nach einem der Ansprüche 1 bis 5, wobei das Polymer P unter Polyphenylensulfon und Mischungen von Polyphenylensulfon mit Polyethersulfon oder Polysulfon ausgewählt wird.

7. Verfahren nach einem der Ansprüche 1 bis 6, wobei das Polymer P von Polyphenylensulfon ausgewählt wird.

8. Verfahren nach einem der Ansprüche 1 bis 7, wobei das Polymer P mindestens 60 Gew.-*%*, bevorzugt mindestens 80 Gew.-*%* und insbesondere mindestens 95 Gew.-*%* des Polyphenylensulfons umfasst.

9. Verfahren nach einem der Ansprüche 1 bis 8, wobei das mindestens eine Koagulierungsmittel Wasser umfasst.

10. Verfahren nach einem der Ansprüche 1 bis 9, ferner einen Schritt des Zusetzens, zu der Spinnlösung D, einer Lösung S umfassend, die ein Copolymer C in Lösungsmittel L umfasst, wobei das Copolymer C Blöcke von mindestens einem Polyarylenether A und Blöcke von Polyalkylenoxid PAO umfasst, wobei der Gehalt an Polyalkylenoxid PAO in dem Copolymer C 30 bis 90 Gew.-*%* beträgt.

11. Nichtionische Membran M, die in dem Verfahren nach einem der Ansprüche 1 bis 10 erhältlich ist.

12. Verwendung der nichtionischen Membran M, die in dem Verfahren nach einem der Ansprüche 1 bis 10 erhältlich ist, zum Filtrieren einer wässrigen Flüssigkeit durch die Membran.

## Revendications

1. Procédé de fabrication d'une membrane non ionique M comprenant les étapes suivantes:
la fourniture d'une solution à filer D comprenant
- un polymère P sélectionné parmi la polyphénylènesulfone ou des mélanges de polyphénylènesulfone avec des éthers de polyarylène non ioniques,
- un premier solvant sélectionné parmi les solvants polaires aprotiques, et
- un cosolvant sélectionné parmi le 1,2-propanediol, le 1,3-propanediol ou des mélanges de ceux-ci; et
la préparation de la membrane en portant la solution à filer D en contact avec un agent de coagulation, dans lequel le rapport en poids du premier solvant au cosolvant se situe dans la plage de 8:1 à 5:1.

2. Procédé selon la revendication 1, dans lequel la solution à filer D comprend de 1 à 30 % en pds, préférablement de 2 à 20 % en pds, et en particulier de 5 à 15 % en pds du cosolvant.

3. Procédé selon l'une quelconque des revendications 1 à 2, dans lequel la solution à filer D comprend au moins 35 % en pds, préférablement au moins 45 % en pds, et en particulier au moins 55 % en pds du premier solvant.

4. Procédé selon l'une quelconque des revendications 1 à 3, dans lequel le premier solvant est sélectionné parmi des éthers à point d'ébullition élevé, des esters, des cétones, des hydrocarbures halogénés de manière asymétrique, l'anisole, le diméthylformamide, le diméthyl sulfoxyde, le sulfolane, la *N*-méthyl-2-pyrrolidone, la *N*-éthyl-2-pyrrolidone, ou des mélanges de ceux-ci.

5. Procédé selon l'une quelconque des revendications 1 à 4, dans lequel le premier solvant est sélectionné parmi la *N*-méthyl-2-pyrrolidone, la *N*-éthyl-2-pyrrolidone, ou des mélanges de celles-ci.

6. Procédé selon l'une quelconque des revendications 1 à 5, dans lequel ledit polymère P est sélectionné parmi la polyphénylènesulfone et des mélanges de polyphénylènesulfone avec de la polyéthersulfone ou de la polysulfone.

7. Procédé selon l'une quelconque des revendications 1 à 6, dans lequel ledit polymère P est sélectionné parmi la polyphénylènesulfone.

8. Procédé selon l'une quelconque des revendications 1 à 7, dans lequel le polymère P comprend au moins 60 % en pds, préférablement au moins 80 % en pds, et en particulier au moins 95 % en pds de la polyphénylènesulfone.

9. Procédé selon l'une quelconque des revendications 1 à 8, dans lequel ledit au moins un agent de coagulation comprend de l'eau.

10. Procédé selon l'une quelconque des revendications 1 à 9, comprenant en outre une étape d'addition à la solution à filer D, d'une solution S qui comprend un copolymère C dans le solvant L, dans lequel ledit copolymère C comprend des blocs d'au moins un éther de polyarylène A et des blocs d'oxyde de polyalkylène PAO, dans lequel la teneur de l'oxyde de polyalkylène PAO dans le copolymère C est de 30 à 90 % en poids.

11. Membrane non ionique M pouvant être obtenue dans le procédé selon l'une quelconque des revendications 1 à 10.

12. Utilisation de la membrane non ionique M pouvant être obtenue dans le procédé selon l'une quelconque des revendications 1 à 10 pour la filtration d'un liquide aqueux à travers la membrane.
